# EUROPÄISCHE PATENTSCHRIFT

(11) **EP 0 638 739 B1**
(45) Veröffentlichungstag und Bekanntmachung des Hinweises auf die Patenterteilung: **08.10.1997**
(21) Anmeldenummer: 94107891.7
(22) Anmeldetag: 21.05.1994
(51) Int. Cl.: F16D 23/06, B60K 17/08

(54) **Synchronisiereinrichtung für eine Planetensatzumschaltung in einem Kraftfahrzeuggetriebe**
Synchroniser for a planetary gear train in a motor vehicle
Synchroniseur pour train planétaire d'un automobile

(30) Priorität: 13.08.1993 DE 4327405
(43) Veröffentlichungstag der Anmeldung: 15.02.1995
(73) Patentinhaber: Volkswagen Aktiengesellschaft, 38436 Wolfsburg (DE)
(72) Erfinder: Scholz, Romanus, Dipl.-Ing., D-38448 Wolfsburg (DE); Heidemeyer, Paulus, Dipl.-Ing-, D-38442 Wolfsburg (DE)

(56) Entgegenhaltungen:
- WO-A-87/00595
- AT-A- 354 263
- DE-A- 4 222 115
- FR-A- 2 466 668
- US-A- 4 998 445

## Beschreibung

Die Erfindung betrifft eine Synchronisiereinrichtung gemäß dem Oberbegriff des Patentanspruchs 1.

Eine derartige gattungsbildende Synchronisiereinrichtung ist beispielsweise aus der unveröffentlichten deutschen Patentanmeldung De-A-42 22 115.3 bekannt. Für die Vorwärts-Rückwärtsgangumschaltung des dort vorgestellten Stufenplanetengetriebes müssen zwei mit dem Planetenträger bzw. mit dem Ringrad fest verbundene Getriebeteile mit Innenschaltverzahnungen wahlweise mit einer eine Außenschaltverzahnung aufweisende und auf einem Achsausgleichsgetriebegehäuse verschieblich aber drehfest angeordneten Schaltmuffe verbunden werden. Um eine einwandfrei Schaltfunktion auch bei rollendem Fahrzeug sicherzustellen, sind in dieser Patentanmeldung zwei vergleichsweise aufwendige Synchronisiereinrichtungen dargestellt worden.

Die Aufgabe der Erfindung besteht darin, eine besonders einfache Synchronisiervorrichtung für ein derartiges Getriebe vorzuschlagen, mit dem eine sichere Schaltung auch bei mit geringer Geschwindigkeit rollendem Fahrzeug möglich ist. Die Lösung dieser Aufgabe ergibt sich aus den Merkmalen des Patentanspruchs 1. Bevorzugte Weiterbildungen und Ausgestaltungen der Erfindung ergeben sich aus den Unteransprüchen.

Erfindungsgemäß wird demnach vorgeschlagen, zwischen den mit einer Schaltmuffe gehäusefest zu verschaltenden Getriebeteilen zwei über Innenverzahnungen verfügende Synchronringe anzuordnen, in die die Außenverzahnung der Schaltmuffe eingreifen kann. Die Innenverzahnungen dieser Synchronringe weisen Dachschrägen auf, die von Synchronring zu Synchronring aufeinander zuweisen. Diese Synchronringe haben zudem konische Außenflächen, die an konischen Innenflächen der Getriebeteile anliegen. Außerdem sind die Synchronringe mit kreissegmentförmigen, einander zugewandten und ineinander fassende Klauen ausgestattet, die die einander gegenüberstehenden Synchronringe auf Abstand halten und eine gewisse Verdrehbarkeit dieser Synchronringe untereinander zulassen.

Zusätzlich ist zwischen den Synchronringen und über den kreissegmentförmigen Klauen ein federnder Ring angeordnet, der einerseits Teile der Außenverzahnung der Schaltmuffe beim Durchschalten federbelastend berührt und andererseits auf Klauen der beiden Synchronringe aufsitzt.

Die Lage der Klauen ist mit der Lage der Innenverzahnung der Synchronringe derart abgestimmt, daß eine Verschiebung der Synchronringe so weit möglich ist, daß die Außenverzahnung der Schaltmuffe von der Verzahnung des ersten Synchronringes in die Verzahnung des zweiten Synchronringes eingreifen kann. Um eine optimale Synchronisierung zwischen den beiden Getriebeteilen zu gewährleisten, ist vorzugsweise eine Verschieblichkeit zwischen den Klauen der beiden Synchronringe von jeweils wenigstens einer einer halben Verzahnungselementbreite vorgesehen.

Der die Synchronringe im Bereich der Klauen umgebende federnde Ring ist in einer besonderen Ausgestaltung der Erfindung derart ausgebildet, daß die Dachschrägen der Außenverzahnung der Schaltmuffe beim Durchschalten an wenigstens drei Abschnitten des Kreisumfanges der Schaltmuffe berührt wird. An den anderen Stellen liegt dieser federnde Ring auf den Klauen der Synchronringe auf. Diese besondere Gestaltung des federnden Rings ermöglicht seine Aufweitung unter Last, so daß die Außenverzahnung der Schaltmuffe unter dem Ring unter Überwindung einer Anpreßkraft hindurchgeschoben werden kann.

In einer anderen Ausgestaltung der Erfindung ist vorgesehen, daß die Synchronringe anstelle der Klauen durch vorzugsweise jeweils wenigstens zwei Hohlzylindersegmente auf Abstand gehalten und in ihrer Verdrehbarkeit zueinander auf einen bestimmten Wert begrenzt werden. Dabei ist vorgesehen, daß sich die Hohlzylinderelemte bei Verwendung von jeweils einem Element pro Synchronring über einen Kreisabschnitt erstrecken, der größer als 90° und kleiner als 180°, vorzugsweise kleiner als 178° ist. Bei der insgesamt aus Wuchtungsgründen vorteilhafteren Ausgestaltung mit zwei oder mehreren Hohlzylinderelementen sollten sich diese über vorzugsweise 87° bzw. 57° erstrecken, so daß Vedrehwinkel von jeweils 3° realisierbar sind. In dieser Bauweise.ist die Lage der Anschläge, also die umfangsseitigen Enden der Hohlzylinderabschnitte, mit der Lage der Verzahnung der Synchronringe so abgestimmt, daß ein Hindurchschieben der Verzahnung der Schaltmuffe durch die der Synchronringe möglich ist. Zudem ist bei einer derartigen Bauweise der federnde Ring innerhalb der Hohlzylinderelemente derart angeordnet, daß er diese federbelastend vorzugsweise an wenigstens drei Umfangsabschnitten berührt.

Letztlich ist in besonderer Ausgestaltung der Erfindung vorgesehen, daß die Schaltmuffe axial verschiebbar aber drehfest auf einem Differentialgetriebegehäuse angeordnet ist.

Die Erfindung läßt sich mit Hilfe der Ausführungsbeispiele und der beigefügten Zeichnung erläutern. Im einzelnen zeigt
- Figur 1: eine schematische Gesamtdarstellung des Planetengetriebes und der Schalt- und Synchronisiereinrichtung, die auf einem Differentialgetriebegehäuse angeordnet ist,
- Figur 2a bis 5b: schematische Darstellungen des Schalt- und Synchronisiervorgangs,
- Figur 6: einen schematischen Querschnitt durch die Syn-chronisiereinrichtung im Bereich des federnden Ringes,
- Figur 7: eine Darstellung gemäß Figur 6, jedoch mit Synchronringen, bei denen die Synchronringklauen durch zwei Hohlzylinderelemente ersetzt sind,
- Figur 8: eine Darstellung gemäß Figur 6, jedoch mit vier Hohlzylinderelmenten,
- Figur 9: hakenförmige Klauen an den Hohlzylinderelementen,
- Figur 10: eine dachförmige Außenkontur des federnden Ringes und
- Figur 11: eine rillenförmige Außenkontur des federnden Ringes.

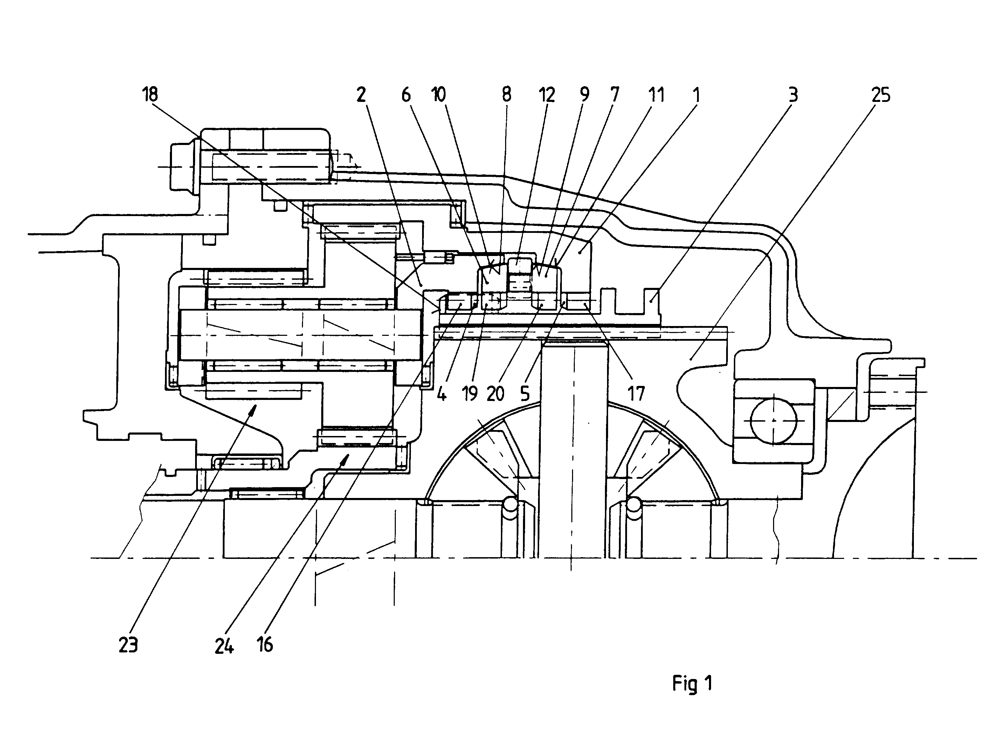

Wie aus Figur 1 ersichtlich, ist die erfindungsgemäße Synchronisiereinrichtung hier für die Synchronisierung der Vorwärts-Rückwärtsgangschaltung eines Stufenplanetengetriebes vorgesehen. In dem dort schematisch dargestellten Getriebe sind ein kleinerer und ein größerer Planetengetriebesatz 23, 24 dargestellt, mit denen die Rückwärts- bzw. Vorwärtsfahrt realisiert werden. An dem Ringrad des größeren Planetengetriebesatzes 24 ist ein erstes Getriebeteil 1 befestigt, während ein mit 2 bezeichnetes zweite Getriebeteil mit dem Planetenträger des kleineren Planetensatzes verbunden ist. Der genauere Aufbau und die Funktionsweise dieses Getriebes ist aus der vorgenannten P 42 22 115.3 entnehmbar, der für die Synchronisiereinrichtung aber nicht weiter von Bedeutung ist. Die Schaltung erfolgt derart, daß die Schaltmuffe 3 axial verschoben wird, so daß ihre Außenverzahnung 18 entweder mit der Innenverzahnung 17 des Getriebeteils 1 oder mit der Innenverzahnung 16 des Getriebeteils 2 kämmt. Eine Leerlaufstellung ist bei dieser Synchronisiereinrichtung nicht vorgesehen.

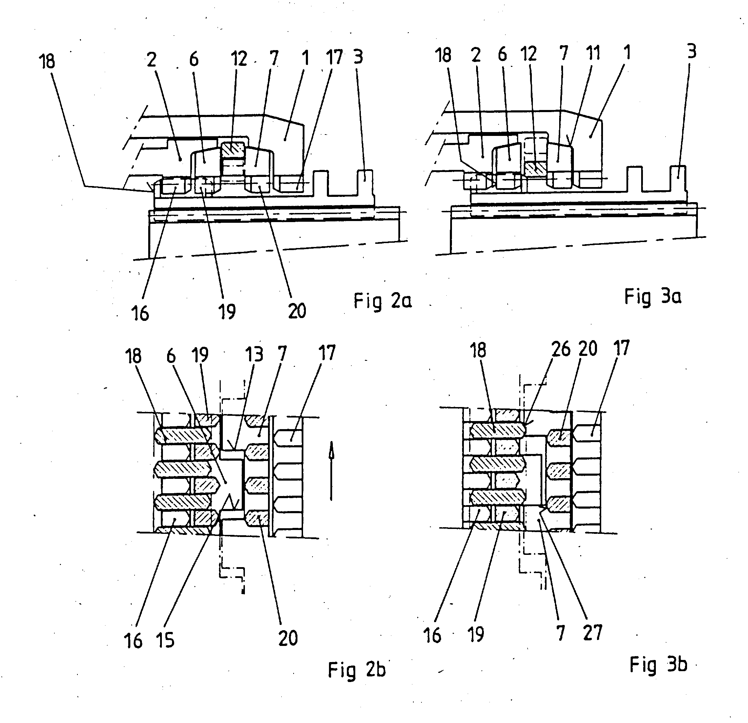

Zur Synchronisierung dieses Schaltvorgangs wird eine Synchronisiereinrichtung vorgestellt, die im wesentlichen aus zwei Synchronringen 6, 7 und einem federnden Ring 12 besteht. Die Synchronringe 6, 7 verfügen über eine Innenverzahnung 19, 20, die mit der Außenverzahnung 18 der Schiebemuffe 3 in Eingriff gebracht werden kann. Die Innenverzahnung 19, 20 hat Dachschrägen 4, 5, die von Synchronring zu Synchronring aufeinander zuzeigen. Zusätzlich weisen die Synchronringe 6, 7 an ihrer Außenseite konische Außenflächen 8, 9 auf, die an konischen Innenflächen 10, 11 der Getriebeteile 1, 2 anliegen. Zudem verfügen diese Synchronringe 6, 7 über kreissegmentförmige Klauen 13, 15, die derart ineinander greifen, daß die Synchronringe zueinander auf Abstand gehalten und ihre Verdrehbarkeit gegeneinander begrenzt wird. Diese Verdrehbarkeit der Klauen 13, 15 gegeneinander sowie ihre Abstandhaltefunktion ist in den Figuren 2b und 3b deutlich dargestellt.

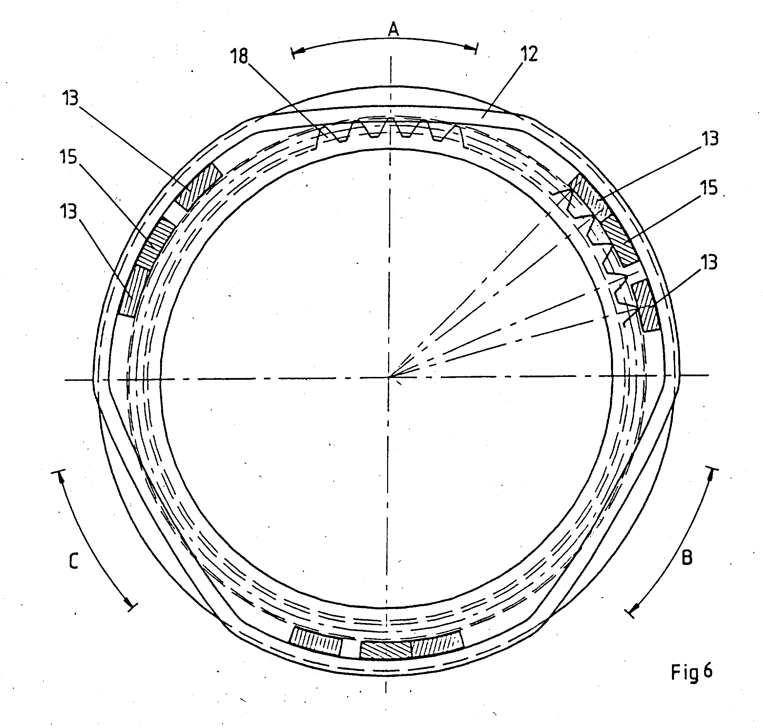

Zwischen den Synchronringen 6, 7 ist zudem der federnder Ring 12 angeordnet, der über seinen Innenumfang die Außenverzahnung 18 der Schaltmuffe 3 und die Klauen 13, 15 der Synchronringe 6, 7 federkraftbelastend berührt (siehe auch Figur 6).

In den Figuren 2a bis 5b ist ein kompletter Schaltvorgang und die dabei ablaufende Synchronisierung durch die erfindungsgemäße Synchronisiereinrichtung offenbart. Dabei ist in den Figuren mit dem Index b jeweils eine Draufsicht aus Achsrichtung auf die Verzahnungselemente der Synchronisiereinrichtung dargestellt.

Ausgehend von Figur 2a befindet sich die Schaltmuffe 3 in der äußersten linken Verschiebungsposition. Hier kämmt die Schaltmuffe 3 mit ihrer Außenverzahnung 18 mit der Innenverzahnung 16 des Getriebeteils 2 und der Innenverzahnung 19 des Synchronrings 6. Der Ring 12 und der Synchronring 7 laufen frei mit und auch die Innenverzahnung 17 des Bauteils 1 kann frei mitdrehen.

In den Figuren 3a und 3b wird die Schaltmuffe 3 nach rechts verschoben und kommt so mit seiner Außenverzahnung 18 an dem Ring 12 zum Anschlag. Dieser federnde Ring 12 drückt dabei den Synchronring 7 gegen den Innenkonus 11 des Getriebeteils 1 so lange an, bis der Synchronring 7 mit den Klauen 13 an den Klauen 15 des Synchronrings 6 anliegt (siehe Pfeil in Figur 2b). In diesem Schaltzustand stehen sich die Dachschrägen 26 der Außenverzahnung 18 der Schaltmuffe 3 und die Dachschrägen 27 des Synchronringes 7 gegenüber, und das Getriebeteil 1 mit seiner Verzahnung 17 wird auf die Drehzahl des Getriebeteils 2 mit seiner Verzahnung 16 beschleunigt.

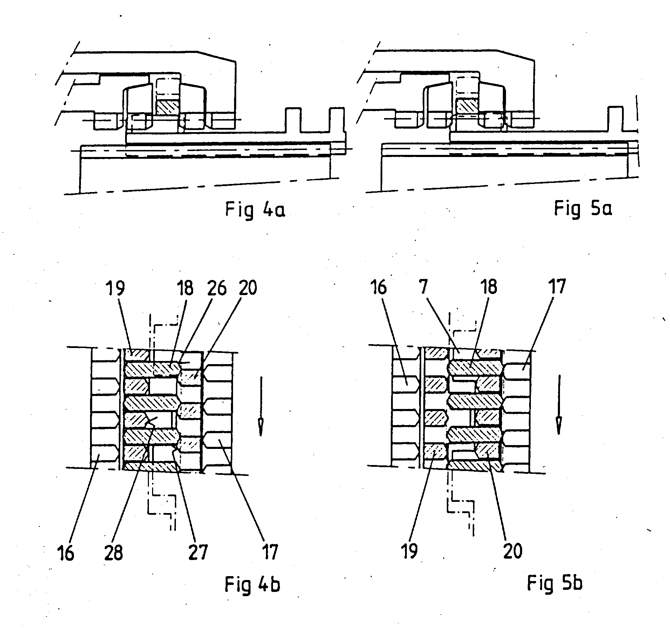

In den Figuren 4a und 4b ist die Situation dargestellt, in der die Schaltmuffe 3 so weit nach rechts verschoben wurde, daß der Ring 12 an den Berührungsabschnitten A, B, C gemäß Figur 6 über die Schrägen der Außenverzahnung 18 der Schaltmuffe 3 aufgeweitet wird. Diese Außenverzahnung 18 kann dann soweit durchgeschaltet werden, bis die Dachschrägen 26 der Schaltmuffe 3 und die Dachschrägen 27 des Synchronrings 7 sich berühren.

In der letzten Schaltposition gemäß den Figuren 5a und 5b wird der Synchronring 7 über dessen Dachschrägen 27 und durch das Eindringen der Verzahnung 18 der Schaltmuffe 3 in die Synchronringverzahnung verdreht (siehe Pfeil), so daß die Verzahnung 18 bis zur Verzahnung 17 des Getriebeteils 1 vordringen kann. Anschließend wird die Innenverzahnung 17 des Bauteils 1 so weit verschoben, daß die Schaltmuffe 3 mit ihrer Außenverzahnung 18 in die Verzahnung 17 völlig durchgeschaltet werden kann, womit der synchronisierte Schaltvorgang abgeschlossen ist.

Zur Verdeutlichung des Aufbaus des federnden Ringes 12 ist in Figur 6 ein Querschnitt durch die Synchronisiereinrichtung zwischen den beiden Synchronringen 6, 7 dargestellt. In der hier dargestellten Ausführungsform ist ein ringförmiges Gebilde 12 vorgesehen, das an drei Stellen kreissehnenförmige Einschnürungen aufweist, mit denen der federnde Ring 12 die Außenverzahnung 18 der Schaltmuffe 3 beim Durchschalten entlang der Kreisabschnitte A, B, C federbelastet berührt. In den anderen Abschnitten liegt der Ring 12 auf den Klauen 13, 15 der Synchronringe 6, 7 auf. Durch diese besondere Gestaltung des federnden Ringes 12 wird ein federbelastetes Durchschieben der Außenverzahnung 18 der Schaltmuffe 3 möglich, so daß ein sicherer Schalt- und Synchronisiervorgang gewährleistet ist.

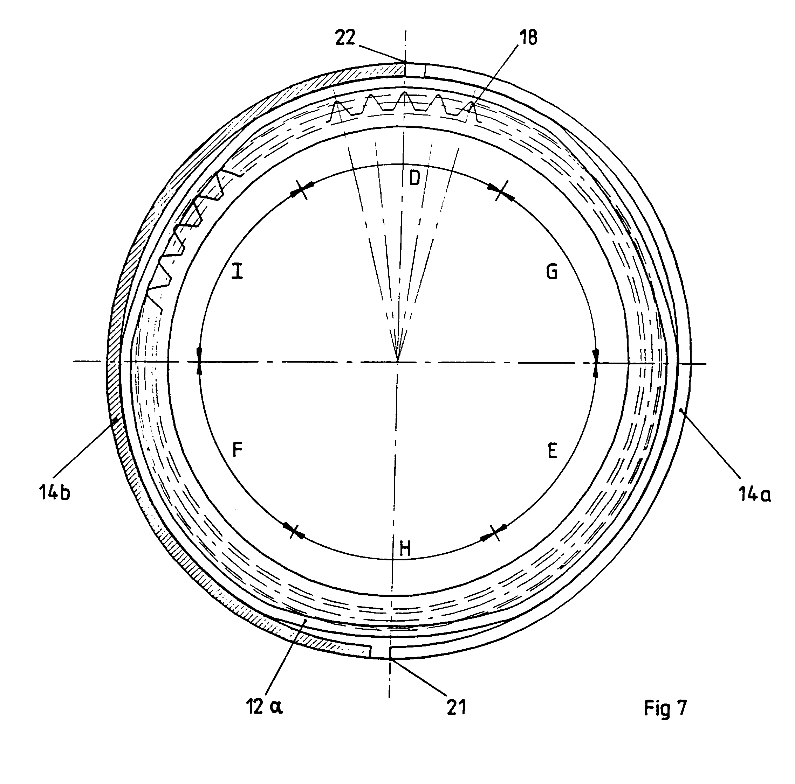

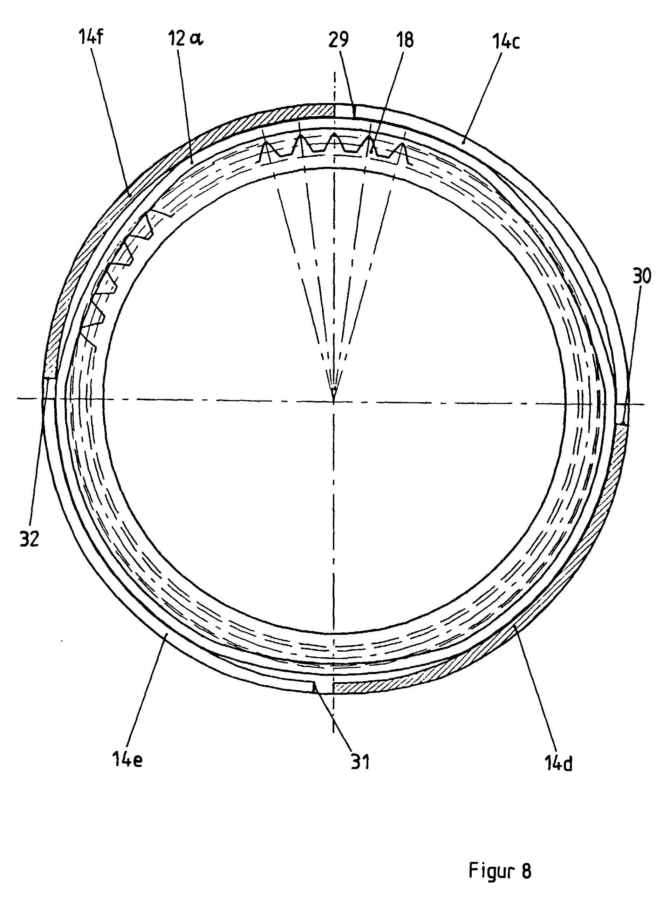

In einer anderen Ausgestaltung der Erfindung (Figur 7, 8) weisen die Synchronringe 6, 7 anstatt der Klauen 13, 15 Hohlzylinderelemente 14a bis 14f auf, die sich vorzugsweise über einen Kreisabschnitt erstrecken, der größer als 56° und kleiner als 180°, vorzugsweise kleiner als 178° ist. Um einen Verdrehwindel von 3° je Hohlzylinderelement einhalten zu können, erstrecken sich die Hohlzylinderelemente 14a, 14b gemäß Figur 7 über 177°, während die bevorzugte Ausführungsform gemäß Figur 8 vier Hohlzylinderelemente 14c bis 14f mit einer Erstreckung von jeweils 87° zeigt. Die umfangsseitigen Enden dieser Hohlzylinderelemente 14a bis 14f sind als Anschläge 21, 22 bzw. 29 bis 32 ausgebildet, die ein Verdrehen der Synchronringe über einen bestimmten Verdrehwinkel hinaus verhindern. In den hier gewählten Beispielen erstrecken sich die Hohlzylinderelemente 14a bis 14f derart, daß eine Verdrehbarkeit zueinander von 6° gewährleistet ist. Der federnde Ring 12a ist in diesem Ausführungsbeispiel innerhalb der Hohlzylinderelemente 14a, 14b angeordnet und drückt von innen federbelastend an wenigstens drei Kreisabschnitten D, E, F auf die Hohlzylinderelemente (Figur 6) und in den Abschnitten G, H, I auf die Außenverzahnung 18 der Schaltmuffe 3. Mit dieser Ausführungsvariante läßt sich die vorgestellte Synchronisiervorrichtung fertigungstechnisch besonders günstig herstellen.

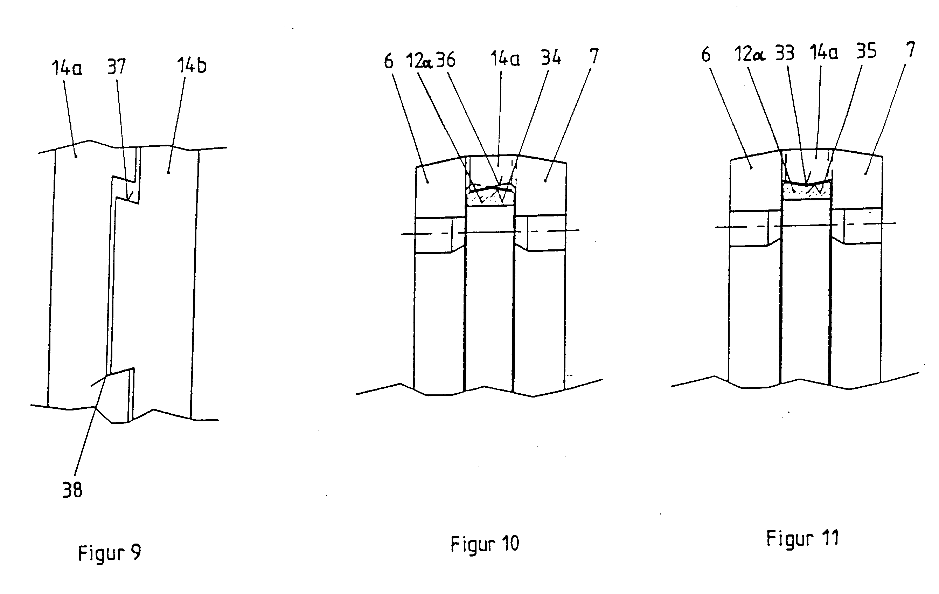

Um im Betrieb des Getriebes das Auseinanderdriften der beiden Synchronringe 6, 7 und damit das Anlaufen dieser Ringe an den relativ zu Ihnen drehenden konischen Innenkonturen 10, 11 von Getriebeteil 1 bzw. Getriebeteil 2 zu mildern, können die Anschläge 21, 22 bzw. 29 bis 32 an den Hohlzylinderelementen 14a bis 14f wie in Figur 9 dargestellt hakenförmig (37, 38) ausgeführt sein.

Eine dachförmige oder rillenförmige Gestaltung der Außenkontur 34, 35 des federnden Ringes 12a gemäß den Fiugren 10, 11 mit entsprechenden Innenkonturen 33, 36 an den Hohlzylinderabschnitten 14a bis 14f bewirken ebenso ein lockeres Zusammenhalten der Synchronringe 6, 7.

### BEZUGSZEICHENLISTE

- 1: Getriebeteil
- 2: Getriebeteil
- 3: Schaltmuffe
- 4: Dachschräge
- 5: Dachschräge
- 6: Synchronring
- 7: Synchronring
- 8: konische Außenkontur
- 9: konische Außenkontur
- 10: konische Innenkontur
- 11: konische Innenkontur
- 12, 12a: federnder Ring
- 13: Klaue
- 14a bis 14f: Hohlzylinderelement
- 15: Klaue
- 16: Innenverzahnung
- 17: Innenverzahnung
- 18: Außenverzahnung
- 19: Innenverzahnung
- 20: Innenverzahnung
- 21: Anschlag
- 22: Anschlag
- 23: Planetengetriebesatz
- 24: Planetengetriebesatz
- 25: Differentialgetriebegehäuse
- 26: Dachschräge
- 27: Dachschräge
- 28: Dachschräge
- 29: Anschlag
- 30: Anschlag
- 31: Anschlag
- 32: Anschlag
- 33: rinnenförmige Innenkontur
- 34: dachförmige Innenkontur
- 35: rinnenförmige Innenkontur
- 36: dachförmige Innenkontur
- 37: hackenförmiger Anschlag
- 38: hackenförmiger Anschlag
- A, B, C: Kreisabschnitte
- D, E, F: Kreisabschnitte

## Patentansprüche

1. Synchronisiereinrichtung für eine Planetensatzumschaltung ein einem Kraftfahrzeuggetriebe,
mit deren Hilfe zwei mit Innenverzahnung (16, 17) versehene Getriebeteile (1, 2) wahlweise mit einer eine Außenverzahnung (18) aufweisende Schaltmuffe (3) drehfest verbunden werden, und bei der die Innenverzahnungen (16, 17) mit einander zugewandten Dachschrägen (4, 5) ausgestaltet sind und die Getriebeteile (1, 2) konische Innenkonturen (10, 11) aufweisen, wobei
zwischen den Dachschrägen (4, 5) der Getriebeteile (1, 2) zwei mit Innenverzahnungen (19, 20) versehene Synchronringe (6, 7) angeordnet sind, und bei der die Synchronringe (6, 7) über konische Außenkonturen (8, 9) verfügen, die an den konischen Innenkonturen (10, 11) der Getriebeteile (1, 2) anliegen,
dadurch gekennzeichnet,
daß die Synchronringe (6, 7) entweder über kreissegmentförmige Klauen (13, 15) oder über Hohlzylinderelemente (14a bis 14f) verfügen, die einander zugewandt sind und ineinander fassen, durch die die Synchronringe (6, 7) untereinander auf Abstand gehalten und ihre Verdrehbarkeit gegeneinander begrenzt wird,
und daß zwischen den Synchronringen (6, 7) ein federnder Ring (12, 12a) angeordnet ist, der einerseits Teile der Außenverzahnung (18) berührt und andererseits entweder auf den Klauen (13, 15) der Synchronringe (6, 7) aufsitzt, oder von innen gegen die Hohlzylinderelemente (14a bis 14f) drückt.

2. Synchronisiereinrichtung nach Anspruch 1, dadurch gekennzeichnet, daß die Lage der Klauen (13, 15) mit der Lage der Innenverzahnung (19, 20) der Synchronringe (6, 7) derart abgestimmt ist, daß eine Verschiebung der Synchronringe (6, 7) um jeweils eine halbe Verzahnungselementbreit stattfinden kann.

3. Synchronisiereinrichtung nach den Ansprüchen 1 bis 2, dadurch gekennzeichnet, daß der federnde Ring (12, 12a) die Außenverzahnung (18) der Schaltmuffe (3) beim Durchschalten an wenigstens drei Kreisabschnitten (A, B, C) berührt.

4. Synchronisiereinrichtung nach Anspruch 2, dadurch gekennzeichnet, daß sich die Hohlzylinderelemente (14a bis 14f) über einen Kreisabschnitt erstrecken, der eine Verdrehbarkeit gegeneinander von bis zu einschließlich 6° zuläßt.

5. Synchronisiereinrichtung nach Anspruch 4, dadurch gekennzeichnet, daß die Hohlzylinderelemente (14a bis 14f) an wenigstens jeweils einem Umfassende als Anschlag (21, 22, 29 bis 32) ausgebildet sind, und daß die Lage der Anschläge (21, 22, 29 bis 32) mit der Lage der Verzahnung der Synchronringe (6, 7) derart abgestimmt ist, daß eine Verschiebung der Synchronringe (6, 7) um jeweils eine halbe Verzahnungsbreite stattfinden kann.

6. Synchronisiereinrichtung nach den Ansprüchen 4 bis 5, dadurch gekennzeichnet, daß der federnde Ring (12a) innerhalb der Hohlzylinderelemente (14a bis 14f) und außerhalb der Schaltmuffenverzahnung (18) angeordnet ist.

7. Synchronisiereinrichtung nach den Ansprüchen 1 bis 6, dadurch gekennzeichnet, daß die Schaltmuffe (3) axial verschiebbar und drehfest auf einem Differentialgetriebegehäuse (25) angeordnet ist.

8. Synchronisiereinrichtung nach den Ansprüchen 1 bis 7, dadurch gekennzeichnet, daß das Getriebeteil (1) mit dem Ringrad eines ersten Planetensatzes (24) und das Getriebeteil (2) mit dem Planetenträger eines zweiten Planetensatzes (23) verbunden ist.

9. Synchronisiereinrichtung nach den Ansprüchen 1 bis 6, dadurch gekennzeichnet, daß die Hohlzylinderelemente (14a bis 14f) mit hakenförmigen Anschlägen (37, 38) ausgebildet sind.

10. Synchronisiereinrichtung nach den Ansprüchen 1 bis 6 und 10, dadurch gekennzeichnet, daß der federnde Ring (12a) eine dachförmige oder rinnenförmige Außenkontur (34, 35) aufweist, während die Hohlzylinderelemente (14a bis 14f) über dachförmige oder rinnenförmige Innenkonturen (33, 36) verfügt.

## Claims

1. Synchroniser for a planetary gear train in a motor vehicle transmission,
with the aid of which two transmission parts (1, 2) provided with internal toothing (16, 17) are selectably connected in a non-rotatable manner to an operating sleeve (3) comprising external toothing (18), and in which the internal toothing parts (16, 17) are formed with mutually facing roof-pitch inclines (4, 5) and the transmission parts (1, 2) comprise conical internal contours (10, 11), wherein
between the roof-pitch inclines (4, 5) of the transmission parts (1, 2) are disposed two synchronising rings (6, 7) provided with internal toothing (19, 20), and in which the synchronising rings (6, 7) have conical outer contours (8, 9) which lie against the conical internal contours (10, 11) of the transmission parts (1, 2),
characterised in that
the synchronising rings (6, 7) have either circle-segment-shaped catches (13, 15) or hollow cylindrical elements (14a to 14f) which face each other and grip each other, by which the synchronising rings (6, 7) are held spaced apart from each other and their rotatability with respect to each other is limited,
and that between the synchronising rings (6, 7) a resilient ring (12, 12a) is disposed which on the one hand contacts parts of the external toothing (18) and on the other hand either sits on the catches (13, 15) of the synchronising rings (6, 7) or is pressed from the inside against the hollow cylindrical elements (14a to 14f).

2. Synchroniser according to claim 1, characterised in that the position of the catches (13, 15) is determined in association with the position of the inner toothing (19, 20) of the synchronising rings (6, 7) in such a way that a displacement of the synchronising rings (6, 7) by in each case one half the width of a toothing element can take place.

3. Synchroniser according to claims 1 to 2, characterised in that the resilient ring (12, 12a) contacts the external toothing (18) of the operating sleeve (3) when switching through on at least three circle portions (A, B, C).

4. Synchroniser according to claim 2, characterised in that the hollow cylindrical elements (14a to 14f) extend over a circle portion which allows a rotatability with respect to each other of up to and including 6°.

5. Synchroniser according to claim 4, characterised in that the hollow cylindrical elements (14a to 14f) are formed on at least one respective surrounding part as a stop (21, 22, 29 to 32), and that the position of the stops (21, 22, 29 to 32) is determined in association with the position of the toothing of the synchronising rings (6, 7) in such a way that a displacement of the synchronising rings (6, 7) by in each case one half the width of a toothing element can take place.

6. Synchroniser according to claims 4 to 5, characterised in that the resilient ring (12a) is disposed inside the hollow cylindrical elements (14a to 14f) and outside the operating sleeve toothing (18).

7. Synchroniser according to claims 1 to 6, characterised in that the operating sleeve (3) is disposed in an axially displaceable and rotationally fixed manner on a differential gear housing (25).

8. Synchroniser according to claims 1 to 7, characterised in that the transmission part (1) is connected to the ring wheel of a first planetary set (24) and the transmission part (2) is connected to the planetary carrier of a second planetary set (23).

9. Synchroniser according to claims 1 to 6, characterised in that the hollow cylindrical elements (14a to 14f) are formed with hook-shaped stops (37, 38).

10. Synchroniser according to claims 1 to 6 and 10, characterised in that the resilient ring (12a) comprises a roof-shaped or channel-shaped outer contour (34, 35), whereas the hollow cylindrical elements (14a to 14f) have roof-shaped or channel-shaped internal contours (33, 36).

## Revendications

1. Système de synchronisation pour l'inversion d'un jeu d'engrenages planétaires dans une boîte de vitesse de véhicule à moteur, système à l'aide duquel on relie au choix de façon solidaire en rotation deux organes de commande (1, 2), pourvus de dentures intérieures (16, 17), à un manchon de commande (3), qui présente une denture extérieure (18), et dans le cas duquel les dentures intérieures (16, 17) sont équipées de chanfreins en forme de toit (4, 5) tournés les uns vers les autres et les organes de commande (1, 2) présentent des contours intérieurs coniques (10, 11), alors qu'entre les chanfreins en forme de toit (4, 5) des organes de commande (1, 2) sont disposés deux anneaux de synchronisation (6, 7) pourvus de dentures intérieures (19, 20), et dans le cas duquel les anneaux de synchronisation (6, 7) disposent de contours extérieurs coniques (8, 9), qui reposent sur les contours intérieurs coniques (10, 11) des organes de commande (1, 2), caractérisé en ce que
les anneaux de synchronisation (6, 7) disposent soit de crabots (13,15) en forme d'arcs de cercle, soit d'éléments cylindriques creux (14a à 14f), qui sont tournés les uns vers les autres et s'emboîtent les uns dans les autres, grâce auxquels les anneaux de synchronisation (6, 7) sont maintenus à distance en dessous l'un de l'autre et leur possibilité de tourner l'un par rapport à l'autre est limitée,
et en ce qu'entre les anneaux de synchronisation (6, 7) est disposé un anneau (12, 12a), faisant ressort, qui d'une part vient en contact avec des parties de la denture extérieure (18)et d'autre part repose soit sur les crabots (13, 15) des anneaux de synchronisation (6, 7), soit exerce une pression de l'intérieur contre les éléments cylindriques creux (14a à 14f).

2. Système de synchronisation selon la revendication 1, caractérisé en ce que la position des crabots (13, 15) est accordée à la position de la denture intérieure (19, 20) des anneaux de synchronisation (6, 7) d'une manière telle qu'un déplacement des anneaux de synchronisation (6, 7) peut avoir lieu sur respectivement la moitié de la largeur d'un élément de denture.

3. Système de synchronisation selon les revendications 1 et 2, caractérisé en ce que la bague (12, 12a), qui fait ressort, vient en contact avec la denture extérieure (18) du manchon de commande (3) lors de l'enclenchement sur au moins trois arcs de cercle (A, B, C).

4. Système de synchronisation selon la revendication 2, caractérisé en ce que les éléments cylindriques creux (14a à 14f) s'étendent sur un arc de cercle, qui leur laisse une possibilité de rotation l'un par rapport à l'autre allant jusqu'à 6°.

5. Système de synchronisation selon la revendication 4, caractérisé en ce que les éléments cylindriques creux (14a à 14f)sont constitués sur au moins respectivement un entourage servant de butée (21, 22, 29 à 32), et en ce que la position des butées (21, 22, 29 à 32) s'accorde avec la position de la denture des anneaux de synchronisation (6, 7) d'une manière telle que peut avoir lieu un déplacement des anneaux de synchronisation (6, 7) de respectivement la moitié de la largeur de la denture.

6. Système de synchronisation selon les revendications 4 et 5, caractérisé en ce que l'anneau (12a), qui fait ressort, est disposé à l'intérieur des éléments cylindriques creux (14a à 14f) et en dehors de la denture (18) du manchon de commande.

7. Système de synchronisation selon les revendications 1 à 6, caractérisé en ce que le manchon de commande (3) peut coulisser axialement et est disposé de façon solidaire en rotation sur une boîte de vitesse à engrenage différentiel (25).

8. Système de synchronisation selon les revendications 1 à 7, caractérisé en ce que l'organe de commande (1) est relié à la roue annulaire d'un premier jeu d'engrenages planétaires (24) et l'organe de commande (2) est relié à la cage de transmission planétaire d'un deuxième jeu d'engrenages planétaires (23).

9. Système de synchronisation selon les revendications 1 à 6, caractérisé en ce que les éléments cylindriques creux (14a à 14f) sont constitués par des butées (37, 38) en forme de crochets.

10. Système de synchronisation selon les revendications 1 à 6 et 10, caractérisé en ce que l'anneau (12a) qui fait ressort présente un contour extérieur (34, 35) en forme de toit ou en forme de gorge, tandis que les éléments cylindriques creux (14a à 14f) disposent de contours intérieurs (33, 36) en forme de toit ou en forme de gorge.
